# EUROPEAN PATENT APPLICATION

(11) **EP 3 370 329 A1**
(43) Date of publication of application: **05.09.2018**
(21) Application number: 15907169.5
(22) Date of filing: 28.10.2015
(51) Int. Cl.: H02K 53/00, H02K 7/18

(54) **METHOD FOR GENERATING ELECTRICAL ENERGY THROUGH THE FALL OF A WEIGHT UPON A HYDRAULIC FLUID**

(71) Applicant: Mainsel, João Gaspar, 6320 Luanda (AO)
(72) Inventor: Mainsel, João Gaspar, 6320 Luanda (AO)
(74) Representative: Hertin und Partner Rechts- und Patentanwälte PartG mbB
(86) International application number: PCT/IB2015/058306
(87) International publication number: WO 2017/072555

(57) **Abstract**

A method for generating electrical energy through the fall of a weight upon a hydraulic fluid (reference sign H) is characterised in that it employs the kinetic energy of a weight (11) which is accelerated by the force of gravity when falling inside a tube (12) which contains a hydraulic fluid which is expelled through a discharge pipe (14) to a gravity box (22) in which blades (21) are contained to rotate a shaft (20) which transfers mechanical energy to an elastic coupling (19) which absorbs shocks and transmits a stable rotation to the alternator (17) which generates electrical energy for the electrical grid and to recharge a battery (10) by cables (18) which also power the motor. The weight (11) is lifted by a motor (7) and a reducer 8 which uses a belt (6) to transmit the movement by means of the belt (6) to a wheel (5) on which a metallic disk (9) is mounted to lock the arm (4) and allow it to be lifted together with the cable (3) connected thereto, passing by a tower (2), and the circulation path of which is controlled by pulleys (1) which cause the weight (11) to be lifted until the arm (4) reaches the vertical position, when it is released and falls, accelerated by the force of gravity. The weight (11) falls freely inside the tube (12) and causes the hydraulic fluid to be expelled towards the blades (21) and then to fall to the bottom of the gravity box (22) which is located above the filling level in the tube (12), causing the fluid to be returned by the force of gravity through discharge pipes (15), at the same time as it is aspirated by the valve (13) under the pressure generated when the weight (11) rises to restart a new cycle.

## Description

This specification relates to a patent application that introduces an apparatus especially designed for use in generation of mechanical energy provided by the rise and fall of a weight element over hydraulic fluid, which may then be used for driving electrical power generators.

The same technique has already been object of patent applications PCT/IB2013/050452, filed on January 17, 2013, and PCT/IB2013/058587, filed on September 04, 2013.

### PRIOR ART

It is generally understood that power generation, in particular electricity, may be based on several widely used principles, such as: hydroelectric, thermoelectric, photovoltaic, wind, geothermal, solar, tidal and nuclear generations.

Power obtained from hydroelectricity is among the most widespread ones and consists of creating a river dam, thereby forming a wide lake where water is stored to be released from higher ground later into a turbine that, upon rotation, drives directly an electrical generator.

Hydroelectricity is a relatively easy way of obtaining power, but it presents some disadvantages such as flooding of large areas which affects the environment and results in the need of relocating the local population.

Thermoelectricity is another widespread form of creating power, according to which fuel (which may be gas, coal, diesel fuel, etc.) is burnt in a boiler for generation of steam from the resulting heat, the steam being directed to a turbine under pressure. Turbine rotation is then used to drive an electrical generator, which converts the mechanical force from the turbine into usable electrical power.

Although less costly when compared to hydro power plants, thermoelectric plants present a series of setbacks which includes: a) the need of constant supply of fuel; b) several environment impacts resulting initially from the production of fuel itself (mining - in case of coal, exploration - in case of oil, deforestation - in case of burning of plant material, etc.); c) environmental impact also from generation of pollutants and greenhouse gases which are released to the atmosphere, especially from those plants that burn coal and oil; d) negative environmental change in view of resulting effects like acid rain.

Photovoltaics consists of using solar panels, produced with coatings that upon exposure to sunlight react with the production of a small electric current, which may be stored in battery banks, or used directly.

Solar energy, despite being a clean and renewable energy, also presents some setbacks, such as: a) low efficiency of solar panels, requiring the use of large areas for producing an usable amount of power; b) high cost for manufacturing the panels, which may require the use of noble materials; c) dependency on meteorological conditions, in special clean skies; d) incapacity of power generation during night or cloudy days.

Wind energy is also clean and renewable energy and its use has been growing during recent years. Widespread use of wind energy during the past years required the creation of large plants usually called wind parks or wind farms, where several wind generators are assembled and then connected to a centralized power grid that receives the generated power and distributes the same to usually supply a local community.

Modern wind power generators are complex and costly machines, manufacture of which requires a detailed analysis since it is common that the rotor (which usually comprises three blades) has a hundred meter or more diameter, and the mechanic assembly of the wind generator is assembled on top of a tower which may have tens of meters height.

Wind power as so defined, notwithstanding its clear positive aspects, also has its disadvantages such as: a) high cost for the manufacture of the wind generators; b) use of skilled labor in their manufacturing; c) high cost of installation and maintenance of wind parks; d) detailed understanding of the place of installation, since the equipment relies on the wind regime; and e) generation of noise from rotation of the rotor, which requires the installation to be made in remote locations.

Geothermal energy is another type of clean and renewable energy, and is based on using specific geological conditions, particularly the presence of thermal sources. Thermal sources are born from heat from the center of the Earth, which, due to geological formation issues, are closer to surface.

In order to retrieve geothermal energy, a complex plant must be built so as to pump water underground, where it is heated until steam under pressure is generated, collected, channeled and directly employed to drive one or more turbines which are directly connected to respective electrical generators.

Geothermal energy has a wide list of benefits, since it consists of a cheaper way of generating electricity, while not depending upon specific meteorological conditions. Geothermal related disadvantages are due to the fact that installation of a geothermal plant depends on specific geological conditions, which are fairly rare. Another disadvantage is the initial cost for implementation of a plant, as well as operation and maintenance thereof by specialized labor.

The use of pure solar energy (differently from the one observed with photovoltaic energy) is a relatively unexplored energy resource and basically consists of the creation of a plant comprising a great number of heliostats which are big automatized mirrors and which are provided with motorization that allows them to keep a constant alignment with the sun in order to direct sun light to a heat exchanger that is placed in a high tower, usually in the center of the area covered by the heliostats.

The tower where the heat exchanger is assembled is usually a big concrete structure, with tens of meters of height, at the top of which there is a housing where the heat exchanger is exposed. Concentration of light from the heliostats makes the heat exchanger to be heated at hundreds of degrees Celsius, which makes oil that circulates therein be equally heated, the oil being subsequently sent to another heat exchanger, where heat is transferred to a boiler that generates hot high pressured steam. The produced heat is then used to drive a turbine which, in its turn, drives an electrical generator.

The few solar plants that are based on the above described principle produces energy in a clean and renewable manner, but, similarly to what can be observed in photovoltaic plants, they also have disadvantages, such as: a) they depend on meteorological conditions (clean skies); b) they do not produce power during night; c) they have high installation and maintenance costs; d) there is also the need of special care during cleaning of the heliostats, since efficiency thereof is lowered proportionally to dust and other materials accumulated on its mirrored surfaces.

Use of sea as a power generating source is a still under development reality, presenting a series of different approaches. One of these approaches consists of building rocky walls leading a vertical tube (usually made from concrete) to the sea, the tube having a lower semi-submersed opening, while at its top one or more rotors are placed, usually known as Wells turbine. The Wells turbine is a particular type of turbine which can be driven by air flowing from both directions of its axis. The Wells turbine can then be driven by air flowing in one direction and also be driven by air flowing in the opposite direction, in either case the turbine rotor rotating in the same direction.

The use of Wells turbines in plants generating power from the sea is due to the fact that the constant movement of the waves makes water go inside the lower opening of the tube, at the top of which the Wells turbine is placed.

The inflow of water through the tube's opening causes a displacement of air inside the tube to be made, forcing this air upwards and making the turbine's rotor to rotate. Subsequently, when the sea level goes down, the volume of water at the lower portion of the tube is lowered and creates a low-pressure condition, which sucks air inside the tube through the turbine's rotor. The air that flows inside the tube also drives the turbine and this cycle of air flow entering and leaving the tube keeps the Wells turbine in constant rotation. The Wells turbine's rotation is used to drive an electrical generator, which produces a small amount of power that can be used.

Another form of using sea energy consists of making use of the rising tide leading sea water to a large reservoir (lake) at ground level, the inflow and outflow of water in this reservoir occurring in one single place where a turbine is placed. Hence, when inflow of water in the reservoir due to the rising tide occurs, it passes through the turbine making it to rotate. At the lowing tide, water exits the reservoir and also drives the turbine. In either case, power is generated both in the rising and lowing tides.

This type of approach, despite being ecologically interesting, depends on characteristics and particularities of the site, as a lake needs to exist or one must be created. On the other hand, the generated power is a direct result of the volume of inflow and outflow of water, and, for this reason, there is no way of increasing its generation capability.

Nuclear energy, one of the several options found in the prior art, is, with no doubt, the most controversial one, as it demands production, handling and disposal of radioactive material, implying serious risks to the environment as a whole.

In conventional nuclear power plants, a reactor, loaded with radioactive material in the form of fuel bars, is reacted and used to heat water of its primary circuit. This water, for being in direct contact with the reactor core, is contaminated and cannot be disposed in the environment, reason why it flows in a closed circuit and goes through a heat exchanger, where uncontaminated water is in contact with the heat of the water from the primary circuit. Uncontaminated water of this second circuit is heated until steam is generated, which flows to a turbine that, upon movement, drives an electrical generator.

Although not relying on meteorological factors, nuclear energy presents serious issues, all due to the nature of the material used. Thus, and as already explained, nuclear fuel used must be initially produced, employed and, after reaching the end of its lifetime, properly stored. In most of the current plants, the worn fuel bars (still at very high temperatures) must be permanently kept inside a water tank, equivalent to an enormous pool, where they are kept for a time interval not smaller than ten years, so that they may lose some of the temperature.

On the other hand, nuclear power plants depend on the use of advanced technology for its operation, which, even though reducing the occurrence of accidents, does not eliminate such possibility.

The accidents of Three Mile Island in the United States in 1979, of Chernobyl in Ukraine in 1986 and, more recently, of Fukushima in Japan in 2011 are some examples of the high level of risk related to nuclear power generation, for those reasons facing resistance from population in several countries fearing the occurrence of such accidents.

In view of the disadvantages of the power generation systems described above, an apparatus has been developed for generating electricity by means of the drop of a weight element, the apparatus being based on an autonomous principle that makes no use of fuels, natural resources, solar energy, nuclear material etc.

The apparatus for generating electricity by means of the drop of a weight element on hydraulic fluid proposed herein is based on using the kinetic energy that results from elevation of a weight element and its drop provided by gravity. The weight element, which is preferably represented by a metallic cylinder, but that may present another geometrical shape, is initially elevated to a certain height with the assistance of a motor reducer powered by a battery, and is released from said height, falling under the force of gravity. Irrespective of the needed technical requirements, mainly those power demands related to the mass increase of the weight element, its elevation consists of using an elevation assembly comprising a cable and a support bar by means of which pulleys are placed to move the cable and the weight element with the assistance of an articulated arm linked to a circular plate, which is used to reduce the force needed for elevating the weight element, the plate rotating by means of an electric motor and a reducer which carry out the needed work to displace the arm to which the cable that elevates the weight element is attached.

For the rise and fall of the weight element, a lever system is used which, since the wheel rotation makes the arm to be supported by a small metallic disk, allows the weight element to be elevated to the drop height, and is then released together with the arm which, in a vertical position, is no longer in contact with the metallic disk and falls together with the weight element in free fall, attracted by the force of gravity, and falling vertically over a tube wherein hydraulic fluid is placed.

As a result of the drop of the weight element, fluid is expelled with pressure through appropriate tubes that carry the fluid to a gravity chamber where vanes are placed and which are forced to move due to the kinetic displacement of the hydraulic fluid, thereby producing mechanical energy over a shaft.

After acting on the vanes, the hydraulic fluid is deposited on the bottom of the gravity chamber which, for being placed in a higher level when compared to the tube, makes the hydraulic fluid to fall under gravity at the same time it is sucked to the inside of the tube with the assistance of an appropriate valve that opens due to the inner pressure of the tube, created at the same time the weight element is elevated once again.

The apparatus for generating electricity by means of the drop of a weight element on hydraulic fluid proposed herein may be assembled in line, to guarantee that, as a group, several force cells alternatively trigger hydraulic fluid over the vanes and guarantee constant movement in the rotor shaft which rotation is adjusted by means of elastic coupling, for generation of electricity in an alternator.

### BRIEF DESCRIPTION OF THE FIGURES

The apparatus for generating electricity by means of the drop of a weight element on hydraulic fluid, which is object of the present patent application, may be understood in all of its aspects by the detailed description which will be made based on the following figures, which:
Figure 1a illustrates a side perspective view of a cell of the elevation mechanism;
Figure 2a illustrates a general perspective view of an assembly comprised of three cells supplying fluid to an electric power generating system;

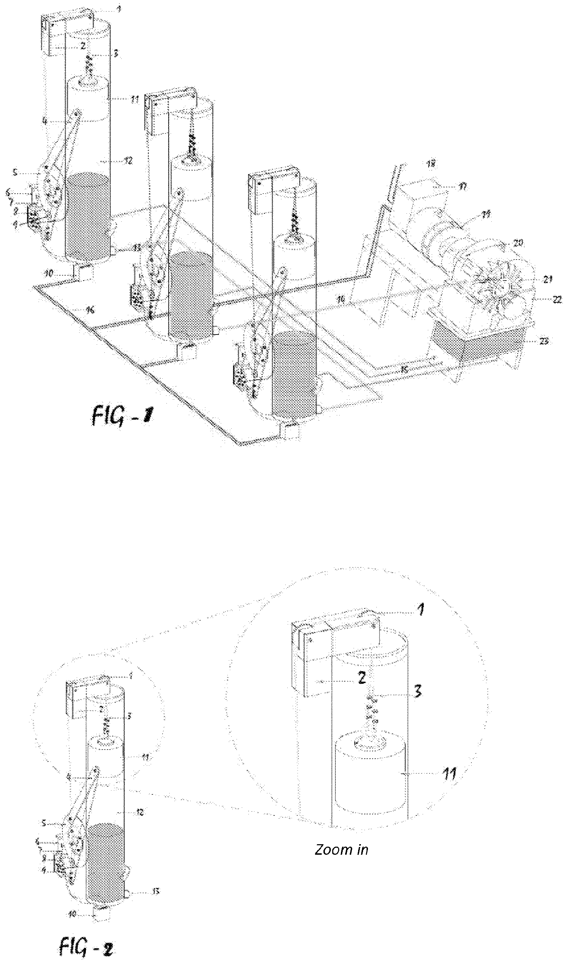

Figure 1b illustrates a zoomed in detail, where all elements related to elevation and fall of the weight element are shown;
Figure 2b illustrates a general perspective, where all elements related to the mechanic energy generation are shown, particularly in a detail of the generating element on a generator separated from the fluid reception box;

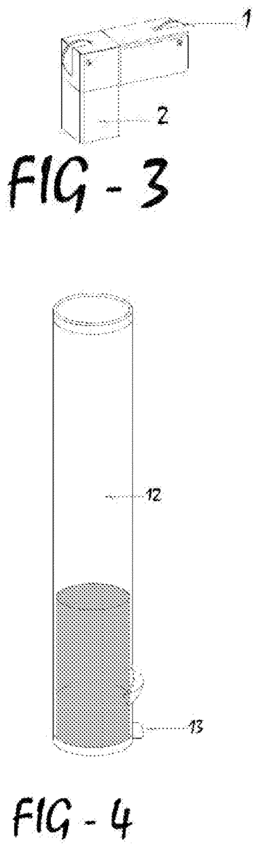

Figure 3a illustrates a general perspective view of the whole assembly in an embodiment where support is made by means of the tube itself;
Figure 1 schematically illustrates all elements needed for the apparatus to work;
Figure 2 illustrates a schematic view with a zoom on a top part of the mechanism responsible for the cable elevation that is connected to the weight element;
Figure 3 illustrates a zoomed in detail of the tower and pulleys assembly;
Figure 4 illustrates a zoomed in detail of the tube assembly with the respective suction valve;

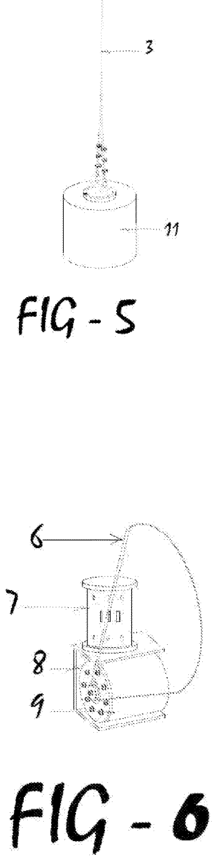

Figure 5 illustrates a zoomed in detail of the weight element and the support cable;
Figure 6 illustrates a zoomed in detail, taken from the motor, reducer and belt;

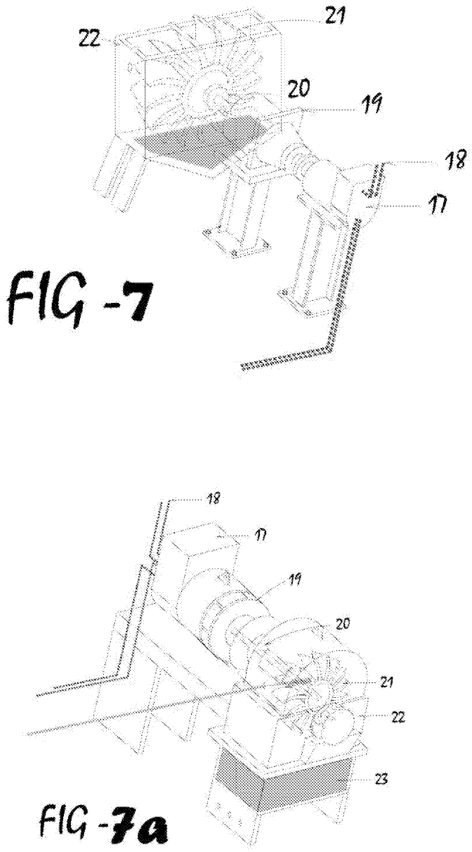

Figure 7 illustrates a zoomed in detail of the power generation assembly;
Figure 7a schematically illustrates the system that receives hydraulic fluid and the transmission of kinetic energy to the shaft vanes, coupling and generator.

### PROBLEM SOLUTION

According to what is shown by the above mentioned figures, the apparatus for generating electricity by means of the drop of a weight element on hydraulic fluid, object of this patent application and which is generally indicated by reference "H", comprises a motor 7, which carry out work to rotate a wheel 5 with the assistance of a reducer 8 by means of a belt 6, which altogether vertically move an arm 4 which, upon movement, elevates the weight element 11, with the assistance of a metallic disc 9 which allows its locking and which, when elevated together with cable 3, that runs through pulleys 1, makes the weight element 11 rise and fall until the full extent of the vertical position of the arm 4, when the arm is released and drops together with the weight element 11 to the inner part of tube 12, inside of which hydraulic fluid is placed.

A tower 2 supports the elevation system and a battery 10, used to power motor 7 and which is charged by alternator 17 by means of cables 18, and which also generates electricity to the grid from movement of a shaft 20, attached to vanes 21 located inside a gravity box 22, which receives hydraulic fluid from inlet pipes 14, which, due to being at higher ground when compared to tube 12, makes the hydraulic fluid return by gravity, the fluid being also sucked by a valve 13 by means of return pipes 15, at the moment the weight element is elevated.

To absorb shock on the vanes 21, an elastic coupling 19 is installed for the purposes of keeping constant rotation of the angular movement allowing the generator 17 to be driven.

Apparatus "H", described herein, comprises a motor 7 and a reducer 8 which transmits movement to a wheel 5 by means of a belt 6, the movement being followed by an arm 4 which is locked by a metallic disc 9, which makes elevation of the weight element 11 easier, until the arm 4 reaches the top vertical portion and, losing support of the metallic disc 9, drops together with the weight element 11, which transmits its energy to the hydraulic fluid which is expelled.

Apparatus "H", described herein, works in an automatized assembly, can be articulated with a single gear and comprises successive cycles of elevation and drop of the weight element 11 over tubes 12 containing hydraulic fluid, which circulates through tubes 14, which direct the same towards the vanes 19, which create mechanical movement in a shaft 20, this movement being conveniently adjusted by means of an elastic coupling 21, by means of which it is adequate to generate electricity in an alternator 17.

## Claims

1. "APPARATUS FOR GENERATING ELECTRICITY BY MEANS OF THE DROP OF A WEIGHT ELEMENT ON HYDRAULIC FLUID", which is referred to by reference "H" and is **characterized by** using kinetic energy of a weight element (11) of a cylindrical shape or any other shape, which falls under gravity to inside a tube (12) where hydraulic fluid is placed which is expelled through pipes (14) transmitting force over vanes (21) that rotate with the assistance of a shaft (20), by means of which movement passes through an elastic coupling (19) that allows rotation transmitted to an alternator (17) to be adjusted, by means of which electricity is generated. A tower (2) is used for elevating the weight element (11), where pulleys (1) are placed, where the cable (3) runs, which is moved by rotation of a wheel (4) which comprises a metallic disc (9) supporting an articulated arm (5) to assist reducing the necessary force to elevate the weight element (11).
In the lower part of apparatus "H", a suction valve (13) is included to make reentry of hydraulic fluid easier after moving the vanes (21), being then deposited on the bottom of the gravity box (22), falling under gravity following outlet pipes (15).

2. "APPARATUS FOR GENERATING ELECTRICITY BY MEANS OF THE DROP OF A WEIGHT ELEMENT ON HYDRAULIC FLUID", according to claim 1, **characterized in that** the weight element (11) may have another geometrical shape, besides the cylindrical shape, and it is responsible for transforming gravity potential energy, when elevated, into kinetic energy, and for expelling hydraulic fluid through pipes (14) to generate kinetic movement over vanes (18), and from the vanes to shaft (20) which transmits the energy to the elastic coupling (19) which adjusts the rotation transmitted to the generator (17).

3. "APPARATUS FOR GENERATING ELECTRICITY BY MEANS OF THE DROP OF A WEIGHT ELEMENT ON HYDRAULIC FLUID", according to claim 1 and 2, **characterized in that** functioning of apparatus (H), described herein, comprises elevation of the weight element (11) from inside a tube (12) until a height to be dropped, to such end a motor (7) and a reducer (8) work to move belt (6) that rotates a wheel (5), used to displace an articulated arm (4) which is supported by a metallic disk (9) to be elevated until the vertical position when it is separated and drops together with the weight element (11), accelerated by the gravity force.

4. "APPARATUS FOR GENERATING ELECTRICITY BY MEANS OF THE DROP OF A WEIGHT ELEMENT ON HYDRAULIC FLUID", according to claim 1, **characterized in that** the apparatus "H" may comprise a battery (10) that powers the motor (7) which carry out work with the assistance of a reducer (8) to elevate the weight element (11) which is connected to a cable (3) that runs through a pulley (1), which assists in the rise and fall movements.
